# EUROPEAN PATENT SPECIFICATION

(11) **EP 4 397 855 B1**
(45) Date of publication and mention of the grant of the patent: **17.12.2025**
(21) Application number: 22884935.2
(22) Date of filing: 14.03.2022
(51) Int. Cl.: F03D 13/40, F16M 11/00

(54) **BALANCE BEARING DEVICE AND CONTROL METHOD THEREFOR, AND TRANSPORTATION APPARATUS**
AUSGLEICHSLAGERVORRICHTUNG UND STEUERUNGSVERFAHREN DAFÜR SOWIE TRANSPORTVORRICHTUNG
DISPOSITIF DE PALIER D'ÉQUILIBRAGE ET SON PROCÉDÉ DE COMMANDE, ET APPAREIL DE TRANSPORT

(30) Priority: 29.10.2021 CN 202111276082
(43) Date of publication of application: 10.07.2024
(73) Proprietor: Jiangsu Goldwind Science & Technology Co., Ltd., Yancheng, Jiangsu 224100 (CN)
(72) Inventor: FANG, Jing, Yancheng, Jiangsu 224100 (CN)
(74) Representative: Gulde & Partner
(86) International application number: PCT/CN2022/080627
(87) International publication number: WO 2023/071018

(56) References cited:
- WO-A1-2012/048719
- WO-A1-2020/117044
- CN-A- 103 506 418
- CN-A- 107 922 025
- CN-A- 111 878 683
- CN-A- 112 030 623
- CN-A- 112 298 528
- CN-A- 113 307 142
- CN-U- 201 782 897
- CN-U- 209 175 398
- CN-U- 210 343 348
- CN-U- 213 323 216
- CN-U- 213 323 216
- CN-U- 214 356 449
- CN-U- 214 356 449
- CN-Y- 2 689 286
- CN-Y- 2 689 286
- JP-U- 3 030 695
- US-A1- 2015 337 799
- US-A1- 2021 071 644

## Description

### TECHNICAL FIELD

The present application relates to the technical field of transportation technology, in particular to a balance bearing device and a control method thereof, and a transport equipment.

### BACKGROUND

Transport equipment has a wide range of usage, and can transport a component to be transported from location A to location B according to requirements. If the component to be transported experiences tilting or other conditions during transport, the safety of the component to be transported will be affected.

Taking the field of wind power technology as an example, the constituent parts of the wind turbine currently need to be transported according to the predetermined construction area of the wind turbine. During transport, it is necessary to ensure the balance of the components and keep them in a horizontal state. During the transport of the offshore wind turbine, due to the surge of seawater, the components are prone to losing balance or even tipping over during transport.

Therefore, there is an urgent need for a balance bearing device.

US2015/337799A1 discloses a blade tip clamp arrangement; US2021/071644A1 discloses apparatuses for wind turbine blade railroad transportation and related systems and methods; WO2012/048719A1 discloses a turning device, especially for a rotor blade for a wind power station.

### SUMMARY

Embodiments of the present application provide a balance bearing device and a control method thereof, and a transport equipment. The balance bearing device can meet the balance requirements of the component to be transported.

In one aspect, the embodiments of the present application provide a balanced load-bearing device for a transport equipment, including two or more mobile assemblies, the two or more mobile assemblies being arranged to be stacked, each mobile assembly including a base, a mobile component, and an adjusting component. The base has an arc-shaped guide rail, and the mobile component is arranged on the base and is able to move along the extension trajectory of the guide rail under the action of gravity so that when the transport equipment tilts, the mobile component connected to a component to be transported is always in a balance position. The adjusting component is connected between the mobile component and the base, and is configured to limit the limiting position of the mobile component moving along the guide rail; wherein the extension directions of the guide rails of two adjacent mobile assemblies intersect with each other, and the base of one of the two adjacent mobile assemblies is connected to the mobile component of the other. In the stacking direction of two or more mobile assemblies, the mobile assembly at the topmost layer is able to be connected to the component to be transported through the mobile component.

According to one aspect of the embodiments of the present application, the mobile component includes a bearing body and multiple mobile units. The multiple mobile units are distributed to be spaced apart and connected to the bearing body respectively. Each mobile unit is movably connected to the guide rail.

According to one aspect of the embodiments of the present application, the base of each mobile assembly has two or more parallel guide rails which are arranged to be spaced apart, and each guide rail is movably connected to at least one mobile unit.

According to one aspect of the embodiments of the present application, the mobile unit includes a support frame, a traveling component, and a locking component. The traveling component is connected to the support frame through the locking component, and the traveling component is able to move along the extension trajectory of the guide rail. The locking component is used to lock the position of the traveling component on the base.

According to one aspect of the embodiments of the present application, in the stacking direction, the base has a top surface and a bottom surface which are arranged to be opposite to each other. The top surface is an arc-shaped surface protruding toward a direction where the bottom surface is located. The guide rail is arranged on the arc-shaped surface. The traveling component is at least partially supported on the top surface, and one of the traveling components and the guide rail is at least partially extended into the interior of the other and can be movably connected to the other.

According to one aspect of the embodiments of the present application, the guide rail is an arc-shaped groove body and is formed to be recessed from the top surface toward a side close to the bottom surface. The traveling component includes a traveling wheel and a clamping protrusion rotatably connected to the traveling wheel. The traveling wheel is supported on the top surface and rotatably connected to the locking component. The clamping protrusion is clamped inside the guide rail and is able to move along the extension direction of the guide rail.

According to one aspect of the embodiments of the present application, the guide rail is an arc-shaped protrusion and is formed to protrude from the top surface toward the side away from the bottom surface. The traveling component includes a traveling wheel and a clamping groove arranged on the traveling wheel. The traveling wheel is supported on the top surface, and the clamping groove is clamped to the guide rail and is able to move along the extension direction of the guide rail.

According to one aspect of the embodiments of the present application, the locking component includes an installation body and a rotating body. The installation body is connected to the support frame. The rotating body is rotatably connected to the installation body through a first rotating pair, and the traveling component is rotatably connected to the rotating body through a second rotating pair. The rotational axis of the first rotating pair is parallel to the rotational axis of the second rotating pair and spaced apart from the rotational axis of the second rotating pair.

According to one aspect of the embodiments of the present application, the rotating body includes a first rotating body and a second rotating body. The installation body is located between the first rotating body and the second rotating body. The first rotating pair is fixedly connected to the first rotating body and the second rotating body and is rotatably connected to the installation body. The traveling component is connected to the first rotating body.

According to one aspect of the embodiments of the present application, the locking component further includes a driving assembly which drives the rotating body to rotate relative to the installation body with the first rotating pair as the rotation center.

According to one aspect of the embodiments of the present application, the locking component further includes an insertion part which can be detachably connected to the traveling component, the installation body, and the rotating body.

According to one aspect of the embodiments of the present application, the balanced bearing device further includes an adapter assembly, and the adapter assembly is connected between two adjacent mobile assemblies.

According to one aspect of the embodiments of the present application, the adapter assembly includes a transition platform and a support rod. The transition platform is located between two adjacent mobile assemblies, and an arc-shaped guide groove is provided on the base of one of the adjacent mobile assemblies. The transition platform is connected to the mobile component of one of the two adjacent mobile assemblies and is connected to the base of the other. One end of the support rod is hinged with the transition platform and the other end is movably connected to the arc-shaped guide groove.

According to one aspect of the embodiments of the present application, the balance bearing device further includes a detector and a controller. The detector is configured to detect the tilting condition of the transport equipment. The controller is configured so that when the tilting condition is within the preset threshold range, the respective mobile component is able to be kept moving along the guide rail under the action of gravity so that the mobile component for connection with the component to be transported is in the balance position
In another aspect, the embodiment of the present application further provides a control method for a balance bearing device, including:
Detecting the tilting condition of the transport equipment where the balance bearing device is located;
When the tilting condition is within the preset threshold range, the respective mobile component is able to be kept moving along the guide rail under the action of gravity so that the mobile component for connection with the component to be transported is in the balance position.

In still another aspect, the embodiments of the present application further provides a transport equipment, which includes a balance bearing device as described in any of the above.

According to the balance bearing device and its control method, as well as the transport equipment provided in the embodiments of the present application, the balance bearing device can be placed on transport vehicles, transport ships, and other transport equipment. The balance bearing device includes two or more mobile assemblies which are arranged to be stacked, and each mobile assembly includes a base, a mobile component and an adjusting component. The extension directions of the guide rails of two adjacent mobile assemblies intersect with each other, and the base of one of the two adjacent mobile assemblies is connected to the mobile component of the other. In transporting the component to be transported, in the stacking direction of two or more mobile assemblies, the mobile component at the topmost layer is connected to the component to be transported through the mobile component. Due to the arc-shaped guide rail of the base, the mobile component is arranged on the base and can move along the extension trajectory of the guide rail, so that when the transport equipment tilts, the corresponding mobile component can move along the extension trajectory of the corresponding guide rail under the action of gravity, so that the mobile component for connection with the component to be transported are always in a balance position, which facilitates the control. The adjusting component which is disposed correspondingly can limit the limiting position of the mobile component moving along the guide rail, which avoids separation of the mobile component from the base, ensures transport safety, and can be suitable for the transport of the components under unstable conditions such as on the sea.

### BRIEF DESCRIPTION OF THE DRAWINGS

The following will refer to the accompanying drawings to describe the features, advantages, and technical effects of the exemplary embodiments of the present application.
Fig. 1 is a structural schematic diagram of a balance bearing device arranged on a transport equipment according to an embodiment of the present application;
Fig. 2 is an axonometric diagram of a balance bearing device in an embodiment of the present application;
Fig. 3 is an exploded schematic diagram of a balance bearing device in an embodiment of the present application;
Fig. 4 is a top view of a balance bearing device in an embodiment of the present application;
Fig. 5 is a structural schematic diagram of a mobile assembly in an embodiment of the present application;
Fig. 6 is a structural schematic diagram of a mobile unit according to an embodiment of the present application;
Fig. 7 is a exploded schematic diagram of a mobile unit in an embodiment of the present application;
Fig. 8 is a front view of a mobile unit according to an embodiment of the present application;
Fig. 9 is a rear view of a mobile unit according to an embodiment of the present application;
Fig. 10 is a side view of a mobile unit according to an embodiment of the present application;
Fig. 11 is a side view of a mobile unit according to another embodiment of the present application;
Fig. 12 is a side view of a mobile unit according to still another embodiment of the present application;
Fig. 13 is a schematic diagram of the local structure of a mobile unit according to an embodiment of the present application;
Fig. 14 is a exploded schematic diagram of a mobile unit according to further another embodiment of the present application;
Fig. 15 is an axonometric view of a balance bearing device in another embodiment of the present application;
Fig. 16 is an axonometric diagram of a balance bearing device in still another embodiment of the present application;
Fig. 17 is a structural schematic diagram of a balance bearing device arranged on a transport equipment according to further another embodiment of the present application;
Fig. 18 is a schematic diagram of the tilting state of the balance bearing device when it is provided on the transport equipment according to further another embodiment of the present application;
Fig. 19 is a flowchart of a control method for a balance bearing device according to an embodiment of the present application;
Fig. 20 is a control flowchart of a balance bearing device according to an embodiment of the present application;
Fig. 21 is a locking flowchart of a balance bearing device in an embodiment of the present application.
Wherein:
100- Balance bearing device;
1- Mobile assembly;
10- Base; 11- Guide rail; 12- Top surface; 13- Bottom surface; 14- Arc-shaped guide groove;
20- Mobile component;
21- Bearing body;
22- Mobile unit;
221- Support frame;
222- Traveling component; 2221- Traveling wheel; 2222-Clampping protrusion;
223- Locking component; 2231- Installation body; 2232- Rotating body; 2232a - First rotating body; 2232b - Second rotating body; 22321- Main body part; 22322- Protruding part; 2233- First rotating pair; 2234- Second rotating pair; 2235- Driving assembly; 2235a - Adjusting screw; 2235b - Nut; 2235c - Electric driving component; 2236- Insertion part;
30-Adjusting component; 301-First electromagnetic part; 302- Second electromagnetic part;
2-Adapter assembly; 201-Transition Platform; 202- Support rod;
3-Detector; 4- Controller;
200- Transport equipment; 300- Component to be transported;
X-Extension direction; Y-Stacking direction.

In the attached drawings, the same components are marked with the same reference sign. The attached drawings were not drawn to the actual scale.

### DETAILED DESCRIPTION

The following will provide a detailed description of the features and exemplary embodiments of the present application in various aspects. In the detailed description below, many specific details are proposed to provide a comprehensive understanding of the present application. However, it is evident to those skilled in the art that the present application can be implemented without the need for some of these specific details. The description of the embodiments below is only intended to provide a better understanding of the present application by showing examples of the present application. In the accompanying drawings and the following description, at least some well-known structures and techniques are not shown in order to avoid unnecessary ambiguity to the present application; Moreover, for clarity, the dimensions of some structures may have been exaggerated. In addition, the features, structures, or characteristics described below can be combined in one or more embodiments in any suitable manner.

The directional words appearing in the following description are all the directions shown in the figures, and are not intended to limit the specific structure of the balance bearing device, the control method thereof and the transport equipment in the present application. In the description of the present application, it should also be noted that unless otherwise specified and limited, the terms "installation" and "connection" should be broadly understood, for example, it can be fixed connection, detachable connection, or integrated connection; It can be direct connection or indirect connection. For the skilled person in the art, the specific meanings of the above terms in the present application can be understood according to specific circumstances.

At present, the constituent parts of the wind turbine need to be transported according to the predetermined construction area of the wind turbine. During transport, it is necessary to ensure the balance of the components and keep them in a horizontal state. Especially for the transportation of the offshore wind turbine, due to transportation costs and water depth in the sea area, the current offshore wind turbine transport ship is relatively small. Therefore, during the installation and lifting process of the offshore wind turbine, due to the shaking of the transport ship, the main engine and other components lose balance, leading to safety risks or extending the lifting time from the transport ship, which cannot achieve and ensure efficient lifting of the offshore wind turbine, and greatly increases the installation cost of the wind turbine.

The existing solutions usually use a six degree-of-freedom robotic arm for compensate a six degree-of-freedom control. The control manner is relatively complex, it is difficult to balance and adjust, and the cost is high.

To address the above issues, the embodiments of the present application provide a balance bearing device that can meet the balancing need of the component to be transported, has a low cost and facilitates the control.

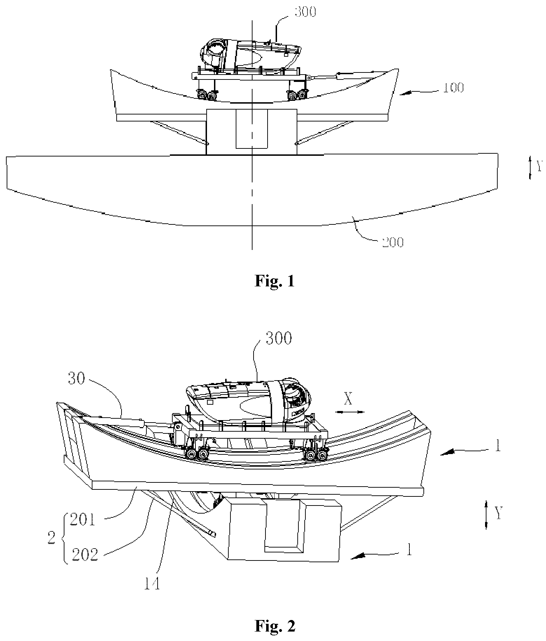

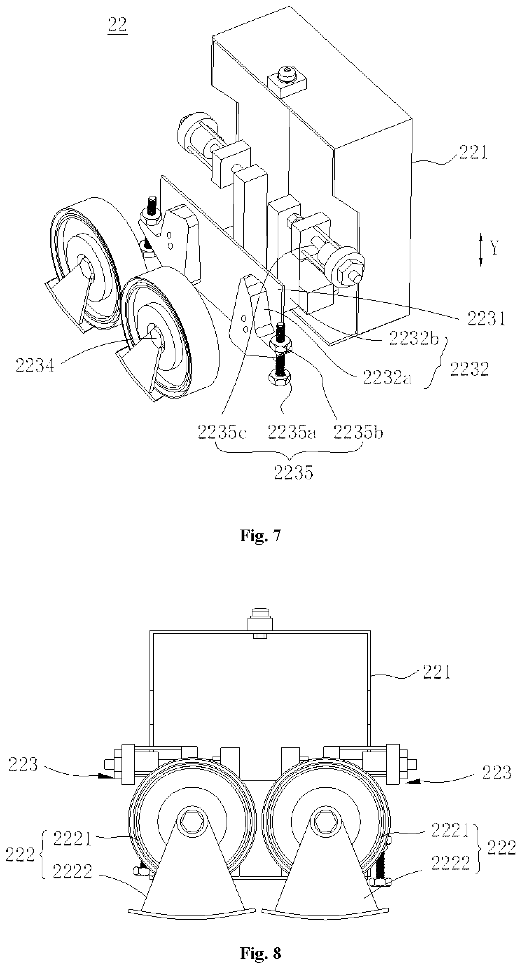

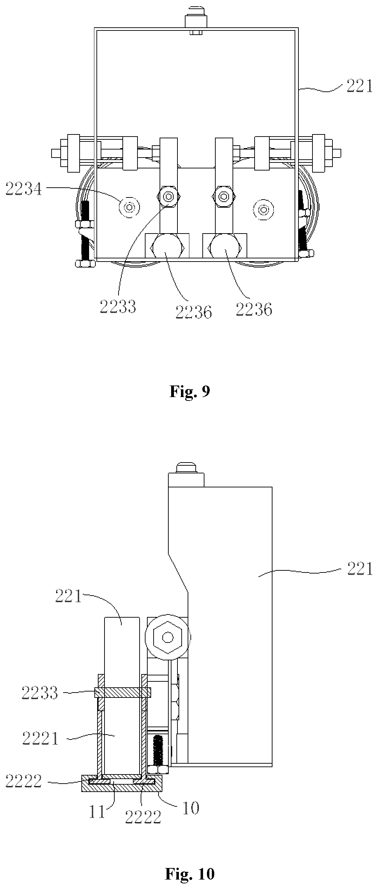

In order to better understand the present application, a detailed description of the balance bearing device, its control method, and transport equipment according to the embodiments of the present application will be provided below, in conjunction with Figs. 1 to 21.

Please refer to Figs. 1 to 4. The embodiments of the present application provide a balance bearing device 100 which is arranged on the transport equipment 200 and includes a mobile assembly 1. Two or more mobile assemblies 1 are arranged to be stacked. Each mobile assembly 1 includes a base 10, a mobile component 20 and an adjusting component 30. The base 10 has an arc shaped guide rail 11. The mobile component 20 is arranged on the base 10 and is capable of moving along the extension trajectory of the guide rail 11 under the action of gravity. The adjusting component 30 is connected between the mobile component 20 and the base 10 and is capable of limiting the limiting position of the mobile component 20 moving along the guide rail 11, wherein the extension directions X of the guide rails 11 of the adjacent two mobile assemblies 1 are arranged to intersect with each other, and the base 10 of one of the mobile assemblies 1 is connected to the mobile component 20 of the other. The mobile assembly 1 at the topmost layer in the stacking direction Y of two or more mobile assemblies 1 can be connected with the component 300 to be transported through the mobile component 20.

Optionally, the number of mobile assemblies 1 is not limited specifically and can be two, three, or even more.

Optionally, in respective mobile assembly 1, the extension directions X of the guide rails 11 on the bases 10 of any two mobile assemblies 1 intersect with each other.

Optionally, in the stacking direction Y, the arc-shaped guide rail 11 on the base 10 of the mobile assembly 1 located at the top layer is recessed towards the direction of the mobile assembly 1 located at the bottom layer. In the stacking direction Y, the arc-shaped guide rails 11 of respective mobile assembly 1 are recessed along the same direction, and all recessed towards the side where the mobile assembly 1 at the bottom layer is located. The arc-shaped guide rail 11 can be the guide rail 11 of the circular arc or the guide rail 11 of the elliptical arc.

The mobile assembly 1 located at the topmost layer can be the mobile assembly 1 provided farthest away from the transport equipment 200 in the stacking direction Y when the balance bearing device 100 is placed on the transport equipment 200 to operate.

The balance bearing device 100 provided in the embodiment of this application can be installed on the transport equipment 200 such as transport vehicle and transport ship when in use. The balance bearing device 100 includes two or more stacked mobile assembly 1, each of which includes a base 10, a mobile component 20 and an adjusting component 30. The extension directions X of the guide rails 11 of the adjacent two mobile assemblies 1 are arranged to intersect with each other, and the base 10 of one of the mobile assemblies 1 is connected to the mobile component 20 of the other. In transporting the component 300 to be transported, it is possible to connect the mobile assembly 1 at the topmost layer in the stacking direction Y of two or more mobile assemblies 1 to the component 300 to be transported through the mobile component 20. Due to the arc-shaped guide rail 11 of the base 10, the mobile component 20 is provided on the base 10 and can move along the extension trajectory of the guide rail 11, so that when the transport equipment 200 tilts, the corresponding mobile component 20 can move along the extension trajectory of the corresponding guide rail 11 under gravity so that the mobile component 20 connected to the component 300 to be transported is always in a balance position, which facilitates control. The corresponding adjusting component 30 can limit the limiting position of the mobile component 20 moving along the guide rail 11, avoiding separation of the mobile component 20 from the base 10, ensuring transport safety on the basis of meeting the balance requirements of the component 300 to be transported, thereby being suitable for the transport of components under unstable conditions such as on the sea.

At the same time, due to the number of mobile assemblies 1 being two or more, the extension directions X of the guide rails 11 of the adjacent two mobile assemblies 1 are arranged to intersect with each other, and the base 10 of one of the mobile assemblies is connected to the mobile component 20 of the other of the mobile assemblies, which can adapt to the tilt of the transport equipment 200 in different directions. Moreover, the mobile assembly 1 has a simple structure and has a modular design, which can reduce the overall cost of the balance bearing device 100.

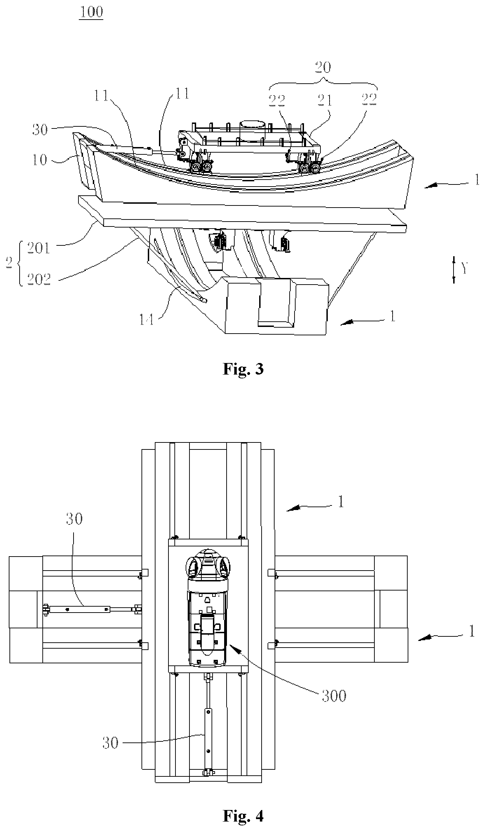

Please refer to Fig. 3. As an optional implementation, in the balance bearing device 100 provided in the embodiments of the present application, the mobile component 20 thereof includes a bearing body 21 and multiple mobile units 22. The multiple mobile units 22 are spaced apart and connected to the bearing body 21 respectively, and the respective mobile unit 22 is movably connected to the guide rail 11.

In the balance bearing device 100 provided in the embodiments of the present application, the mobile component 1 adopts the above structural form, which can ensure the requirements of the connection with the component 300 to be transported and the requirements of the connection between the adjacent two mobile assemblies 1. Meanwhile, the mobile component 1 can engage with the corresponding guide rail 11 through multiple mobile units 22, so that when the transport equipment 200 shakes and loses balance, the mobile component 20 can drive adjacent mobile assembly 1 connected therewith or the component 300 to be transported to move along the corresponding guide rail 11 under the action of gravity, ensuring the balance requirements of the component 300 to be transported.

Optionally, the bearing body 21 can be a solid seat structure, of course, can also be hollow frame structure. A connection interface can be provided on the bearing body 21 to facilitate connection with the component 300 to be transported or the base 10 of the adjacent bearing assembly.

Optionally, the number of mobile units 22 can be two, three, or even more. Alternatively, the mobile units 22 are arranged in pairs, and the paired mobile units 22 are symmetrically distributed on the bearing body 21 to ensure the force balance of the bearing body and further ensure the transport safety.

In some optional embodiments, the balance bearing device 100 provided in the embodiments of the present application further includes an adapter assembly 2, which is connected between two adjacent mobile assemblies 1. That is to say, two adjacent mobile assemblies 1 are indirectly connected to each other through the adapter component 2, which facilitates the connection requirement between the two adjacent mobile assemblies 1.

As an optional implementation, in the balance bearing device 100 provided in the present embodiments of the application, the adapter component 2 includes a transition platform 201 and a support rod 202. The transition platform 201 is located between adjacent two mobile assemblies 1, and an arc-shaped guide groove 14 is provided on the base 10 of one of the adjacent two mobile assemblies 1. The transition platform 201 is connected to the mobile component 20 of one of the adjacent two mobile assemblies 1 and is connected to the base 10 of the other of the adjacent two mobile assemblies 1. One end of the support rod 202 is hinged with the transition platform 201, and the other end of the support rod 202 is movably connected to the arc-shaped guide groove 14. The adapter component 2 adopts the above structure, which facilitates the connection between the two adjacent mobile assemblies 1 and can ensure the overall stability when the mobile component 20 of one of the adjacent two mobile assemblies 1 drives the other to move.

In some optional embodiments, in the balance bearing device 100 provided in the embodiments of the present application, the adjusting component thereof may include a telescopic cylinder. One of the cylinder body and the cylinder rod of the telescopic cylinder is connected to the mobile component 20 and the other is connected to the base 10. The adjusting component 30 adopts the form of a telescopic cylinder, which can limit the limiting position of the mobile component 20 by limiting the stroke of the telescopic cylinder, avoiding the separation of the mobile component 20 from the corresponding base 10. Meanwhile, within the stroke range of the telescopic cylinder, when the mobile component 20 moves, the telescopic cylinder can move correspondingly without affecting the movement of the mobile component 20 under the action of gravity.

Optionally, the adjusting component 30 is connected to the base 10 and the mobile component 20 respectively in a hinged manner.

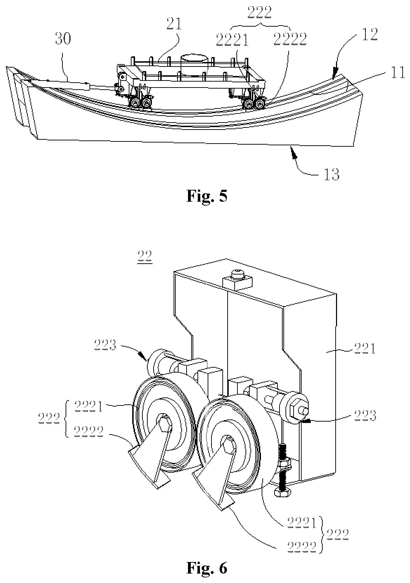

Please refer to Figs. 5 to 10. In some optional embodiments, in the balance bearing device 100 provided in the embodiments of the present application, the mobile unit 22 includes a support frame 221, a traveling component 222, and a locking component 223. The traveling component 222 is connected to the support frame 221 through the locking component 223, and the traveling component 222 can move along the extension trajectory of the guide rail 11. The locking component 223 is used to lock the position of the traveling component 222 on the base 10.

The balance bearing device 100 provided in the embodiments of the present application allows the mobile unit 22 to be connected to the bearing body 21 through the support frame 221, by the mobile unit 22 including the support frame 221, the traveling component 222, and the locking component 223. The support frame 221 can further provide connection and installation space for the locking component 223. The traveling component 222 disposed correspondingly can drive the entire mobile component 20 to move along the arc trajectory of the guide rail 11. The arrangement of the locking component 223 can lock the position of the traveling component 222 on the base 10, so as to lock the traveling component 222 when the balance bearing device 100 is in a non-operation state or in the case that the transport equipment 200 is inclined at a large angle and is about to tip over, avoiding the mobile component 20 from continuing to move along the guide rail 11 and saving energy. At the same time, the safety performance of the balance bearing device 100 is improved.

Optionally, the support frame 221 can adopt a frame structure, and a connection interface is provided on the support frame 221 for connecting with the bearing body 21.

Optionally, the support frame 221 can be a hollow frame structure, and the locking component 223 is at least partially located in the hollow cavity of the support frame 221. Through the above arrangement, the engagement between the locking component 223 and the support frame 221 is facilitated, while the overall structure of the mobile unit 22 is compact and occupies small space.

As shown in Figs. 5 to 10, as an optional implementation, in the balance bearing device 100 provided in the embodiments of the present application, the base 10 has a top surface 12 and a bottom surface 13 arranged opposite to each other in the stacking direction Y, the top surface 12 is an arc-shaped surface protruding towards the direction where the bottom surface 13 is located, the guide rail 11 is arranged on the arc-shaped surface, and the traveling component 222 is at least partially supported on the top surface 12. One of the traveling components 222 and the guide rail 11 extends at least partially into the interior of the other of the traveling components 222 and the guide rail 11 and is movably connected to the other of the traveling components 222 and the guide rail 11.

The base 10 adopts the above structural form and the guide rail 11 is provided on the arc-shaped surface, which facilitates the formation of the arc-shaped guide rail 11. The traveling component 222 being supported at least partially on the top surface 12 can increase the contact area between the base 10 and the traveling component 222, share the pressure borne by the traveling component 222 through the arc-shaped surface, reduce friction during traveling, and ensure the smooth movement of the traveling component 222. At the same time, by allowing one of the traveling components 222 and the guide rail 11 to extend at least partially into the interior of the other and be movably connected to the other, it is possible to restrict the traveling components 222 to move always along the extension trajectory of the guide rail 11, thereby avoiding offset of the traveling components 222 relative to the guide rail 11.

Optionally, the bottom surface 13 of the base 10 can be a plane, facilitating connection with the mobile component 20 of the adjacent mobile assembly 1.

As an optional implementation, in the balance bearing device 100 provided in the embodiments of the present application, the guide rail 111 is an arc-shaped groove and the guide rail 11 is formed to be recessed from the top surface 12 towards the side close to the bottom surface 13. The traveling component 222 includes a traveling wheel 2221 and a clamping protrusion 2222 rotatably connected to the traveling wheel 2221. The clamping protrusion 2222 at least partially protrudes from a peripheral surface of the traveling wheel 2221. The traveling wheel 2221 is supported on the top surface 12 and rotatably connected to the locking component 223. The clamping protrusion 2222 is clamped inside the guide rail 11 and can move along the extension direction X of the guide rail 11.

Through the above arrangement, it is possible to restrict the movement of the traveling component 222 along the extension trajectory of the guide rail 11 by the coordination between the clamping protrusion 2222 and the guide rail 11, thereby avoiding offset of the traveling component 222 relative to the guide rail 11. The traveling wheel 2221 is in rolling engagement with the top surface 12, which facilitates the movement of the traveling component 222 and meanwhile sharing the pressure borne by the mobile unit 22 through the top surface 12.

Optionally, the clamping protrusion 2222 can be rotatably engaged with the traveling wheel 2221 through the second rotating pair 2234, and alternatively, the clamping protrusion 2222 can rotate around the central axis of the traveling wheel 2221.

As shown in Figs. 5 to 10, alternatively, the clamping protrusions 2222 can be arranged in pairs and can be arranged on both sides of the traveling wheels 2221 in their own axial direction. Of course, this is an optional implementation.

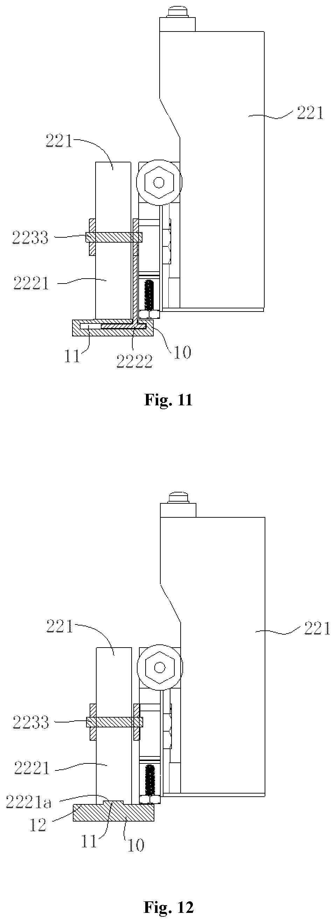

As shown in Fig. 11, in some embodiments, the number of the clamping protrusion 2222 can also be one and the clamping protrusion 2222 can be disposed on one side of the traveling wheel 2221 in its own axial direction.

It can be understood that when one of the traveling components 222 and the guide rail 11 extends at least partially into the interior of the other and is movably connected to the other, the above structural form is not limited.

As shown in Figs 5 to 12, in some embodiments, the guide rail 11 can also be arc-shaped convex, and the guide rail 11 is formed to protrude from the top surface 12 towards the side away from the bottom surface 13. The traveling component 222 includes the traveling wheel 2221 and a clamping groove 2221a arranged on the traveling wheel 2221. The traveling wheel 2221 is supported on the top surface 12, and the clamping groove 2221a is clamped to the guide rail 11 and can move along the extension direction X of the guide rail 11. Also, the requirements of limiting the travel wheel 2221 and sharing pressure through the top surface 12 are met.

Referring to Figs. 6 to 12. As an optional implementation, in the balance bearing device 100 provided in the embodiments of the present application, the locking component 223 may include an installation body 2231 and a rotating body 2232. The installation body 2231 is connected to the support frame 221. The rotating body 2232 is rotatably connected to the installation body 2231 through the first rotating pair 2233. The traveling component 222 is rotatably connected to the rotating body 2232 through the second rotating pair 2234. The rotation axis of the first rotating pair 2233 is parallel to the rotation axis of the second rotating pair 2234 and spaced apart from the rotation axis of the second rotating pair 2234.

In the balance bearing device 100 provided in the embodiments of the present application, the locking component 223 adopting the above structural form can be connected to the support frame 221 through the installation body 2231, thereby providing support for the installation of the rotating body 2232 and the traveling component 222. Since the rotating body 2232 is rotatably connected to the installation body 2231 through the first rotating pair 2233 and the traveling component 222 is rotatably connected to the rotating body 2232 through the second rotating pair 2234, the traveling component 222 can rotate relative to the rotating body 2232 with the second rotating pair 2234 as the rotation center, thereby driving the mobile component 20 as a whole to move along the extension trajectory of the guide rail 11.

At the same time, the rotating body 2232 can drive the traveling component 222 as a whole to rotate relative to the installation body 2231 with the first rotating pair 2233 as the rotation center. As the rotation axis of the first rotating pair 2233 is parallel to the rotation axis of the second rotating pair 2234 and spaced apart from the rotation axis of the second rotating pair 2234, that is to say, the first rotating pair 2233 deviates from the rotation center of the traveling component 222, during the rotating of the rotating body 2232 with the first rotating pair 2233 as the rotation center, the traveling component 222 undergoes eccentric motion, which can increase the friction force between the traveling wheel 2221 and the supporting surface in contact with it, for example, the fiction between the traveling wheel 2221 and the top surface 12, so as to limit the traveling of the traveling component 222, thereby achieving the locking requirement.

Optionally, the first rotating pair 2233 can include a first rotating shaft and a first limiting cap located on at least one end of the first rotating shaft in the axial direction. The first rotating shaft can be fixedly connected to the rotating body 2232 and rotatably connected to the installation body 2231, and the first limiting cap is used to limit the separation of the first rotating shaft from the installation body 2231 in its own axial direction.

Optionally, the second rotating pair 2234 can include a second rotating shaft and a second limiting cap located on at least one end of the second rotating shaft in the axial direction. The second rotating shaft can be fixedly connected to one of the traveling wheel 2221 and the rotating body 2232 and rotatably connected to the other. The second limiting cap is used to limit the separation of the second rotating shaft from the traveling wheel 2221 or the rotating body 2232 in its own axial direction.

As an optional implementation, in the balance bearing device 100 provided in the embodiments of the present application, the rotating body 2232 includes a first rotating body 2232a and a second rotating body 2232b. The installation body 2231 is located between the first rotating body 2232a and the second rotating body 2232b. The first rotating pair 2233 is fixedly connected to the first rotating body 2232a and the second rotating body 2232b and is rotatably connected to the installation body 2231. The traveling component 222 is rotatably connected to the first rotating body 2232a.

The rotating body 2232 adopts the above structural form, so that when the rotating body 2232 rotates with the first rotating pair 2233 as the rotation center, the smoothness of rotation can be ensured and the connection with the traveling component 222 is facilitated. Optionally, the traveling wheel 2221 can be rotatably connected to the first rotating body 2232a through the second rotating pair 2234.

As an optional implementation, the locking component 223 provided in the embodiments of the present application further includes a driving assembly 2235, which drives the rotating body 2232 to rotate relative to the installation body 2231 with the first rotating pair 2233 as the rotation center. Through the above arrangement, the rotating body 2232 can be driven to rotate by the driving assembly 2235. When it is necessary to lock the traveling component 222, the driving assembly 2235 can drive the rotating body 2232 to rotate, thereby increasing the friction force between the traveling component 222 and the supporting surface in contact with it during the rotation of the rotating body 2232 with the first rotating pair 2233 as the rotation center, so as to limit the traveling of the traveling component 222, thereby achieving the locking requirement.

In some optional embodiments, the driving assembly 2235 includes an adjusting screw 2235a and a nut 2235b. One end of the adjusting screw 2235a is connected to the base 10 and the other end of the adjusting screw 2235a passes through the first rotating body 2232a. The nut 2235b is in threaded connection with the adjusting screw 2235a. The nut 2235b can move along the axial direction of the adjusting screw 2235a and squeeze the first rotating body 2232a to drive the rotating body 2232 as a whole to rotate relative to the installation body 2231 with the first rotating pair 2233 as the center.

In the balance bearing device 100 provided in the embodiments of the present application, the driving assembly 2235 includes the adjusting screw 2235a, so that one end of the adjusting screw 2235a is connected to the base 10 and the other end of the adjusting screw 2235a passes through the first rotating body 2232a. In the stacking direction Y, the nut 2235b is located on the side of the rotating body 2232 away from the base 10. When it is necessary to lock the traveling component 222, the nut 2235b can be screwed to move along the axial direction of the adjusting screw 2235a and squeeze the first rotating body 2232a so as to drive the rotating body 2232 as a whole to rotate relative to the installation body 2231 with the first rotating pair 2233 as the center, thereby achieving the locking of the traveling component 222.

When unlocking is necessary, the adjusting screw 2235a is separated from the base 10 and the nut 2235b is unlocked.

Optionally, the adjusting screw 2235a can extend along the stacking direction Y, which facilitates driving the first rotating body 2232a.

In some optional embodiments, in the balance bearing device 100 provided in the embodiments of the present application, the drive assembly 2235 may further include an electric driving component 2235c, one end of which is connected to the support frame 221 and the other end of which is engaged with the second rotating body 2232b to drive the rotating body 2232 as a whole to rotate relative to the installation body 2231 with the first rotating pair 2233 as the center.

When it is necessary to lock the traveling component 222, the electric driving component 2235c can further be controlled to drive the second rotating body 2232b to rotate. As the second rotating body 2232b is fixedly connected to the first rotating body 2232a through the first rotating pair 2233 to be a whole, and the first rotating pair 2233 is rotatably connected to the installation body 2231, hence when the second rotating body 2232b rotates, the first rotating pair 2233 drives the first rotating body 2232a to rotate with the first rotating pair 2233 as the rotation center, which can also achieve the locking of the traveling component 222.

Please refer to Figs 12 to 14. In some optional embodiments, the first rotating body 2232a includes a main body part 22321 and a protruding part 22322 protruding from the main body part 22321. The first rotating pair 2233 and the second rotating pair 2234 are spaced apart at the main body part 22321, and the adjusting screw 2235a passes through the protruding part 22322 and is connected to the nut 2235b. The nut 2235b moves along the axial direction of the adjusting screw 2235a and squeezes the protruding part 22322.

The first rotating body 2232a adopts the above structural form, which can facilitate the engagement with the adjusting screw 2235a and the nut 2235b so as to ensure the rotation need.

As an optional implementation, in the axial direction of the adjusting screw 2235a, the extension size of the protruding part 22322 is smaller than that of the main body part 22321, and the surface of the protruding part 22322 that is engaged with the nut 2235b is a plane. Through the above arrangement, the interference between the adjusting screw 2235a, the nut 2235b and the base 10 can be effectively avoided when the first rotating body 2232a is driven to rotate with the first rotating pair 2233 as the rotation center, which facilitates the rotation of the first rotating body 2232a and can increase the rotation range of the first rotating body 2232a.

In some optional embodiments, the electric driving component 2235c includes a telescopic member which is connected to the second rotating body 2232b. The telescopic member extends or retracts to drive the second rotating member 2232b to rotate the first rotating body 2232a and the traveling component 222 with the first rotating pair 2233 as the center.

The electric driving component 2235c adopting the above structural form has simple structure, which facilitates the control and can ensure the driving requirement for the second rotating body 2232b.

As an optional implementation, the telescopic direction of the electric driving component 2235c can be perpendicular to the stacking direction Y, the second rotating body 2232b can be a strip like structure, and the driving end of the electric driving component 2235c can be connected on one side of the second rotating body 2232b and drive the second rotating body 2232b to rotate.

As shown in Figs. 6 to 13, in some optional embodiments, in the balance bearing device 100 provided in the embodiments of the present application, the locking component 223 further includes an insertion part 2236 detachably connected to the traveling component 222, the installation body 2231, and the rotating body 2232, which can further meet the locking requirement of the mobile component 20.

As an optional implementation, in the balance bearing device 100 provided in the embodiments of the present application, multiple traveling components 222 are provided, and each traveling component 222 is correspondingly provided with a locking component 223. Through the above arrangement, the movement requirement of the mobile component 20 can be ensured, while the locking requirement of each traveling component 222 can be ensured, thereby improving safety performance.

Optionally, the number of traveling components 222 connected to the same support frame 221 can be two or more. Taking two traveling components 222 as examples, the two traveling components 222 can be spaced apart in the extension direction X of the guide rail 11, and each traveling component 222 can be correspondingly provided with one locking component 223. The installation body 2231 of each locking component 223 is connected to the support frame 221. The installation body 2231 of each locking component 223 connected to the same support frame 221 can be an integrated structure.

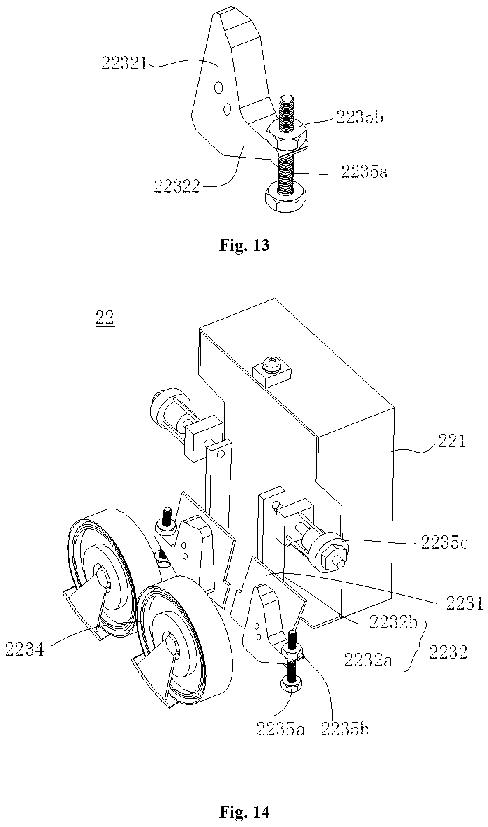

Please refer to Fig. 14. In some embodiments, the installation body 2231 of each locking component 223 connected to the same support frame 221 can also be a split structure.

In some optional embodiments, in the balance bearing device 100 provided in the embodiments of the present application, the number of the mobile assemblies is two, and the extension trajectories of the guide rails 11 of the two mobile assemblies 1 are perpendicular to each other. Through the above arrangement, the balance bearing device 100 can drive the component 300 to be transported to adjust the balance by using gravity in two directions perpendicular to each other. The structure is simple and the need can be adjusted self-adaptively by using the gravity.

It can be understood that in the above embodiments, the telescopic cylinder adopted by the adjusting component 30 is only an optional implementation, but is not limited thereto.

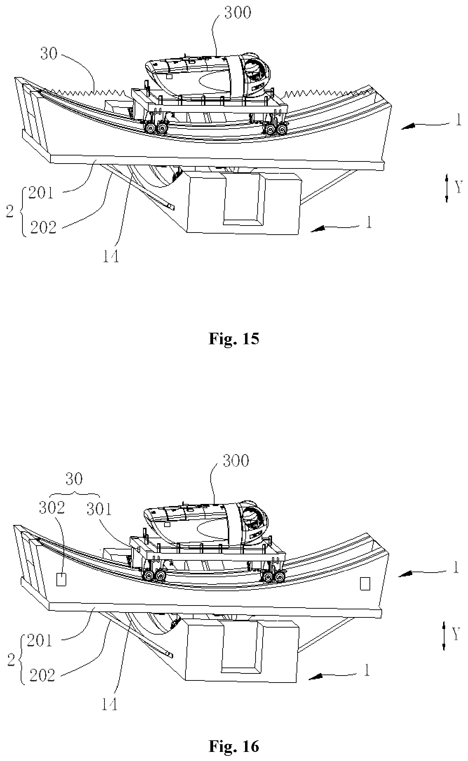

Please refer to Fig. 15. In some embodiments, the adjusting component 30 can also include an elastic body with one end of the elastic body connected to the mobile component 20 and the other end connected to the base 10, which can also meet the limiting requirements without affecting the function of the mobile component 20 to move along the extension trajectory under gravity. Optionally, the elastic body may include a spring.

The adjusting component 30, according to Hooke's theorem, has a restoring force when the displacement is maximum, which can alleviate and reduce the inclination of the angle and also meet the limiting effect.

Optionally, when the adjusting component 30 includes the elastic body, the number of the elastic bodies can be two, and the two elastic bodies are spaced apart and distributed on both sides of the mobile component 20 in the extension direction X of the guide rail of the mobile assembly 1.

Please refer to Fig. 16. In some other embodiments, the adjusting component 30 can also include an electromagnetic member. The electromagnetic member includes a first electromagnetic part 301 and a second electromagnetic part 302. The first electromagnetic part 301 is connected to the mobile component 20, and the second electromagnetic part 302 is connected to the base 10. The first electromagnetic part 301 and the second electromagnetic part 302 can interact with each other and generate an action of magnetic force. The first electromagnetic part 301 and the second electromagnetic part 302 increase and decrease the magnetic force by changing the distance. When the distance is closest, the magnetic force is maximum and the suction force is strongest, while when the distance is far, the magnetic force decreases. Therefore, the second electromagnetic part 302 can be arranged at the locked limiting point position, and the magnetic force can be attracted and repelled through forward and reverse electrification, which can also meet the limiting requirements.

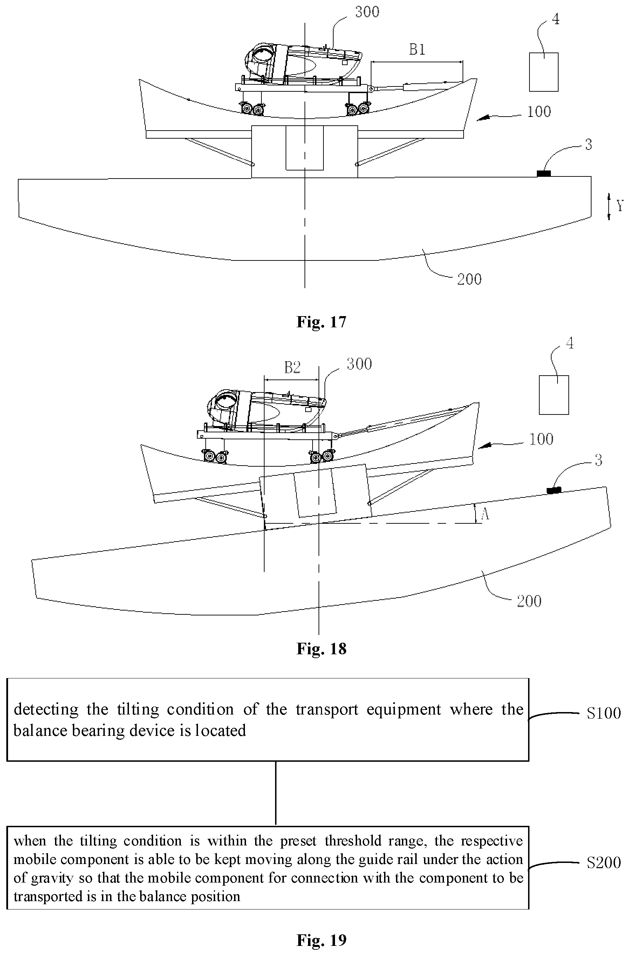

Please refer to Figs. 17 and 18. As an optional implementation, the balance bearing device provided in the embodiments of the present application further includes a detector 3 and a controller 4. The detector 3 is configured to detect the tilting condition of transport equipment 200, and the controller 4 is configured so that when the tilting condition is within the preset threshold range, the respective mobile component 20 can be kept moving along the guide rail 11 under the action of gravity so that the mobile component 20 for connection with the component 300 to be transported is in the balance position.

That is to say, when the tilting condition is within the preset threshold range, the adjusting component 30 is in a following state. When the transport equipment 200 tilts, the mobile component 20 in the corresponding tilting direction can move along the extension trajectory of the corresponding guide rail 11 under the action of gravity to self-adaptively adjust the balance of the component 300 to be transported, thereby ensuring the safety of the component 300 to be transported.

It should be noted that the balance position mentioned above and below in the present application refers to the angle between the horizontal direction of the mobile component 20 for connection with the component 300 to be transported and the horizontal plane being 0 °. That is to say, the surface for supporting the component 300 to be transported of the mobile component 20 in connection with the component 300 to be transported is in a horizontal state and the angle between the surface and the horizontal plane is 0 °.

Optionally, the detector 3 can include either a displacement sensor or an inclination angle sensor, and the detector 3 can be provided on the transport equipment 200.

Optionally, the tilting condition includes the tilting angle A of the transport equipment 200 relative to the horizontal plane, and the preset threshold range includes -7° ± 0.5 ° ≤ A ≤ 7 ° ±0.5° . That is to say, the transport equipment 200 can tilt forward at an angle of less than or equal to 7° ± 0.5 °, or tilt backward at an angle of less than or equal to 7° ± 0.5 °.

Optionally, in some embodiments, the tilting condition can further include the displacement B of the mobile component 20 along the extension direction X of the corresponding guide rail 11. The preset threshold range further includes B1-B2≤B≤ B1+B2, where B1 is the length size of the adjusting component 30 in the extension direction X of the guide rail 11 when the center of gravity of the mobile component 20 of the mobile assembly 1 for connection with the component 300 to be transported coincides with the center of gravity of the base 10 in the stacking direction Y, and B2 is the offset size of the center of gravity of the mobile component 20 of the mobile assembly 1 for connection with the component 300 to be transported relative to the center of gravity of the base 10 in the extension direction X of the guide rail 11 when the tilt angle of the transport equipment 200 reaches the preset threshold range.

As an optional implementation, in the balance bearing device 100 provided in the embodiments of the present application, the controller 4 are further configured to control the adjusting component 30 to provide a force opposite to the direction of movement of the mobile component 20 to the mobile component 20 when the tilting condition exceeds a preset threshold range.

That is to say, when the tilting condition includes the tilting angle A of the transport equipment 200 relative to the horizontal plane, and when A < -7 ° ± 0.5° or A > 7° ± 0.5°, the adjusting component 30 is controlled to provide a force opposite to the direction of movement of the mobile component 20 to the mobile component 20 so as to avoid further movement of the mobile component 20 and the separation from the base 10.

When the tilting condition includes the displacement B of the mobile component 20 along the extension direction X of the corresponding guide rail 11, and when B>B1+B2 or B<B1-B2, the adjusting component 30 is controlled to provide a force opposite to the movement direction of the mobile component 20 to the mobile component 20 so as to avoid the mobile component 20 from continuously moving to separate from the base 10.

Of course, when the tilting condition exceeds the preset threshold range, the controller 4 can further control to lock the position of the mobile component 20 of each mobile assembly 1 relative to the base 10. When the driving assembly 2235 is included, the electric driving component 2235c of the driving assembly 2235 can be controlled to achieve locking by driving the traveling component 222 with the first rotating pair 2233 as the rotation center by the rotating body 2232.

Please refer to Figs. 17 to 19. On the other hand, the present application further provides a control method for a balance bearing device 100, including:
S100, detecting the tilting condition of the transport equipment 200 where the balance bearing device 100 is located;
S200, when the tilting condition is within the preset threshold range, the respective mobile component 20 can be kept moving along the guide rail 11 under the action of gravity so that the mobile component 20 for connection with the component 300 to be transported is in the balance position

Optionally, in step S100, the tilting condition may include the tilting angle A of the transport equipment 200 relative to the horizontal plane and/or the displacement B of the mobile component 20 along the extension direction X of the corresponding guide rail 11.

Optionally, in step S200, when the tilting condition is within the preset threshold range, the adjusting component 30 is in a following state. When the transport equipment 200 tilts, the mobile component 20 in the corresponding tilting direction can move along the extension trajectory of the corresponding guide rail 11 under the action of gravity to self-adaptively adjust the balance of the component 300 to be transported, thereby ensuring the safety of the component 300 to be transported.

As an optional implementation, the control method of the balance bearing device 100 provided in the embodiments of the present application further includes controlling the adjusting component 30 to provide a force opposite to the direction of movement of the mobile component 20 to the mobile component 20, and/or to lock the position of the mobile component 20 of each mobile assembly 1 relative to the base 10, when the tilting condition exceeds a preset threshold range.

When the tilting condition can include the inclination angle A of the transport equipment 200 relative to the horizontal plane and/or the displacement B of the mobile component 20 along the extension direction X of the corresponding guide rail 11. The threshold range of the inclination angle A and the threshold range of the displacement B are the same as the limitations in the balance bearing device 100 in the above embodiments, and will not be repeated herein.

As an optional implementation, the control method provided in the embodiments of the present application further includes detecting that the balance bearing device 100 is in a non-operation state and providing a locking signal.

The operator can control the driving assembly 2235 to drive the rotating body 2232 to rotate based on the locking signal, thereby achieving the locking of the position of the mobile component 20. In order for a better distinction, the manner of driving the first rotating body 2232a to rotate to achieve locking by engaging the adjusting screw 2235a with the nut 2235b is referred to as mechanical locking, and the manner of driving the second rotating body 2232b to rotate to achieve locking by the electric driving component 2235c is referred to as electromagnetic locking. And, the balance bearing device 100 can include two sets of mobile assemblies 1, the mobile assembly connected to the transport equipment 200 is referred to as the mobile component in the lower layer, and the adjusting component 30 is referred to as the adjusting component in the lower layer. The mobile assembly 1 arranged away from the transport equipment 200 and for connection with the component 300 to be transported is referred to as the mobile component in the upper layer, and the adjusting component 30 is referred to as the adjusting component in the upper layer.

In order to better understand the control method provided in the embodiments of the present application, specific examples will be provided below for explanation.

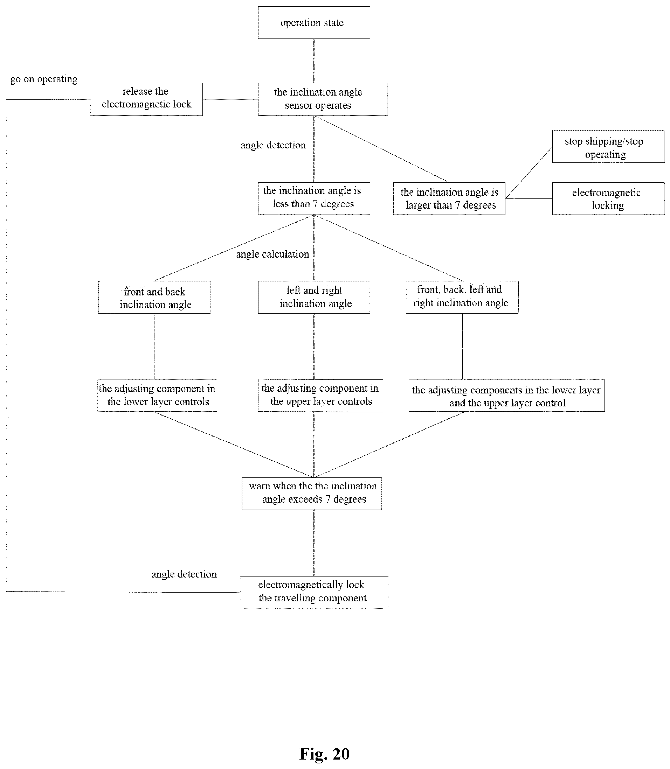

Please refer to Fig. 20. When the balance bearing device 100 is in operation state, the inclination angle A of the transport equipment 200 can be collected through the inclination angle sensor. When the inclination angle A is less than or equal to 7 degrees, the adjusting component 30 in the corresponding position can be activated according to the inclination direction.

For example, when the inclination angle A is the front and back inclination angle, the controlled is performed by the adjusting component in the lower layer. When the inclination angle A is the left and right inclination angle, the controlled is performed by the adjusting component in the upper layer, and when the inclination angles are present both in the front and back direction and in the left and right direction, that is to say, when the front and back inclination angle and the left and right inclination angle are present, the control is performed simultaneously by the adjusting components in the lower layer and the upper layer.

When the inclination angle A of the mobile component 20 during the movement exceeds 7° ± 0.5°, the position of the mobile component 20 of each mobile assembly 1 relative to the base 10 is locked. Specifically, electromagnetic locking can be used to lock the traveling components 222. When the inclination angle A of the transport equipment 200 is less than or equal to 7° ± 0.5°, the electromagnetic lock is released and the adjusting is restarted.

When the inclination angle A of the transport equipment 200 detected by the inclination angle sensor is larger than 7° ± 0.5°, the shipping is stopped and the operation is stopped and the traveling component 222 is locked by electromagnetic locking.

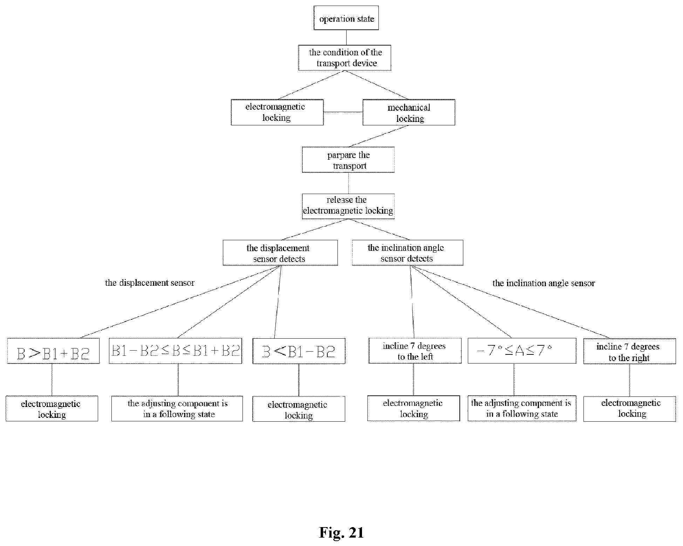

Please refer to Fig. 21. For the locking of the balance bearing device 100, the following example can be referred to. When the balance bearing device 100 is in operation state and needs to transport the component 300 to be transported, the electromagnetic lock can be powered according to the conditions of the transport equipment 200. The traveling component 222 can be locked by the electromagnetic locking, and the mechanical locking structure is unlocked. When the component 300 to be transported is lifted to the balance bearing device 100 for transportation, the electromagnetic locking is released.

The displacement sensor can be used to detect whether the displacement B of the mobile component 20 along the extension direction X of the corresponding guide rail 11 is within the preset threshold range. When B>B1 +B2 or B<B 1-B2, electromagnetic locking is used to lock the traveling component 222. When B1-B2≤B≤B1+B2, the adjusting component 30 is in a following state.

Of course, it is also possible to detect whether the inclination angle A of the transport equipment 200 relative to the horizontal plane is within the preset threshold range by the inclination angle sensor. When A<-7°±0.5° or A >7 ° ± 0.5° , the electromagnetic locking is used to lock the traveling component 222. When -7 ° ± 0.5° ≤A≤7° ± 0.5°, the adjusting component 30 is in a following state.

When the balance bearing device 100 is in a non-operation state, both mechanical locking and electromagnetic locking can be used to lock the traveling component 222, thus ensuring safety.

The control method of the balance bearing device 100 provided in the embodiments of the present application can meet the transportation requirements of the component 300 to be transported. When the tilting condition of the transport equipment 200 where the balance bearing device 100 is located is detected to be within the preset threshold range, the respective mobile component 20 can be kept moving along the guide rail 11 under the action of gravity so that the mobile component 20 for connection with the component 300 to be transported is in the balance position, thus achieving automatic balance adjustment under the action of gravity. When the tilting condition exceeds the preset threshold range, the locking of the traveling component 222 is used to ensure safety.

On the other hand, the present application further provides a transport equipment 200, and a balance bearing device 100 is arranged on the transport equipment 200. The transport equipment 200 can be a transport vehicle, a transport ship, etc.

Although the present application has been described with reference to preferred embodiments, various improvements can be made and components can be replaced with equivalents without departing from the scope of the present application. Especially, as long as there is no structural conflict, the various technical features mentioned in each embodiment can be combined in any way. This application is not limited to the specific embodiments disclosed in the text, but includes all technical solutions falling within the scope of the claims.

## Claims

1. A balance bearing device (100) for a transport equipment (200), comprising:
two or more mobile assemblies (1), wherein the two or more mobile assemblies (1) are arranged to be stacked, each of the mobile assemblies includes a base (10), a mobile component (20), and an adjusting component (30), the base (10) comprises an arc-shaped guide rail (11), the mobile component (20) is arranged on the base (10) and is able to move along an extension trajectory of the guide rail (11) under the action of gravity so that when the transport equipment (200) tilts, the mobile component (20) connected to a component (300) to be transported is always in a balance position, the adjusting component (30) is connected between the mobile component (20) and the base (10), and is configured to limit a limiting position of the mobile component (20) moving along the guide rail (11);
wherein extension directions (X) of the guide rails (11) of adjacent two mobile assemblies (1) intersect with each other, and the base (10) of one of the adjacent two mobile assemblies (1) is connected to the mobile component (20) of the other of the adjacent two mobile assemblies (1), and in a stacking direction (Y) of the two or more mobile assemblies (1), the mobile assembly (1) located at the topmost layer is able to be connected to the component (300) to be transported through the mobile component (20).

2. The balance bearing device (100) according to claim 1, wherein the mobile component (20) comprises a bearing body (21) and a plurality of mobile units (22), the plurality of mobile units (22) are distributed to be spaced apart and connected to the bearing body (21) respectively, and each mobile unit (22) is movably connected to the guide rail (11).

3. The balance bearing device (100) according to claim 2, wherein the base (10) of each mobile component (1) comprises two or more parallel guide rails (11) which are arranged to be spaced apart, and each guide rail (11) is movably connected to at least one mobile unit (22).

4. The balance bearing device (100) according to claim 2, wherein the mobile unit (22) comprises a support frame (221), a traveling component (222) and a locking component (223), the traveling component (222) is connected to the support frame (221) through the locking component (223), the traveling component (222) is able to move along the extension trajectory of the guide rail (11), and the locking component (223) is configured to lock a position of the traveling component (222) on the base (10).

5. The balance bearing device (100) according to claim 4, wherein in the stacking direction (Y), the base (10) comprises a top surface (12) and a bottom surface (13) which are arranged to be opposite to each other, the top surface (12) is an arc-shaped surface protruding toward a direction where the bottom surface (13) is located, the guide rail (11) is arranged on the arc-shaped surface, the traveling component (222) is at least partially supported on the top surface (12), and one of the traveling component (222) and the guide rails (11) extends at least partially into an interior of the other of the traveling component (222) and the guide rails (11) and is movably connected to the other of the traveling component (222) and the guide rails (11).

6. The balance bearing device (100) according to claim 5, wherein the guide rail (11) is an arc-shaped groove body, the guide rail (11) is formed to be recessed from the top surface (12) toward a side close to the bottom surface (13), the traveling component (222) comprises a traveling wheel (2221) and a clamping protrusion (2222) rotatably connected to the traveling wheel (2221), the traveling wheel (2221) is supported on the top surface (12) and rotatably connected to the locking component (223), and the clamping protrusion (2222) is clamped inside the guide rail (11) and is able to move along the extension direction (X) of the guide rail (11);
or, the guide rail (11) is an arc-shaped protrusion, the guide rail (11) is formed to protrude from the top surface (12) toward a side away from the bottom surface (13), the traveling component (222) comprises a traveling wheel (2221) and a clamping groove (2221a) arranged on the traveling wheel (2221), the traveling wheel (2221) is supported on the top surface (12), and the clamping groove (2221a) is clamped to the guide rail (11) and is able to move along the extension direction (X) of the guide rail (11).

7. The balance bearing device (100) according to claim 4, wherein the locking component (223) comprises an installation body (2231) and a rotating body (2232), the installation body (2231) is connected to the support frame (221), the rotating body (2232) is rotatably connected to the installation body (2231) through a first rotating pair (2233), the traveling component (222) is rotatably connected to the rotating body (2232) through a second rotating pair (2234), and a rotational axis of the first rotating pair (2233) is parallel to a rotational axis of the second rotating pair (2234) and spaced apart from the rotational axis of the second rotating pair (2234).

8. The balance bearing device (100) according to claim 7, wherein the rotating body (2232) comprises a first rotating body (2232a) and a second rotating body (2232b), and the installation body (2231) is located between the first rotating body (2232a) and the second rotating body (2232b), the first rotating pair (2233) is fixedly connected to the first rotating body (2232a) and the second rotating body (2232b) and is rotatably connected to the installation body (2231), and the traveling component (222) is connected to the first rotating body (2232).

9. The balance bearing device (100) according to claim 8, wherein the locking component (223) further comprises a driving assembly (2235) which drives the rotating body (2232) to rotate relative to the installation body (2231) with the first rotating pair (2233) as a rotation center.

10. The balance bearing device (100) according to claim 7, wherein the locking component (223) further comprises an insertion part (2236) detachably connected to the traveling component (222), the installation body (2231), and the rotating body (2232).

11. The balance bearing device (100) according to claim 1, wherein the balance bearing device (100) further comprises an adapter assembly (2) which is connected between two adjacent mobile assemblies (1).

12. The balance bearing device (100) according to claim 11, wherein the adapter assembly (2) comprises a transition platform (201) and a support rod (202), the transition platform (201) is located between the two adjacent mobile assemblies (1), an arc-shaped guide groove (14) is provided on the base (10) of one of the two adjacent mobile assemblies (1), the transition platform (201) is connected to the mobile component (20) of one of the two adjacent mobile assemblies (1) and is connected to the base (10) of the other of the two adjacent mobile assemblies (1), one end of the support rod (202) is hinged to the transition platform (201) and the other end of the support rod (202) is movably connected to the arc-shaped guide groove (14).

13. The balance bearing device (100) according to claim 1, wherein the balance bearing device (100) further comprises a detector (3) and a controller (4), the detector (3) is configured to detect a tilting condition of the transport equipment (200), the controller (4) is configured so that when the tilting condition is within the preset threshold range, the respective mobile component (20) is able to be kept moving along the guide rail under the action of gravity so that the mobile component (20) for connection with the component (300) to be transported is in the balance position.

14. A control method for the balance bearing device (100) as claimed in any one of claims 1 to 12, comprising:
detecting a tilting condition of the transport equipment (200) where the balance bearing device (100) is located; and
when the tilting condition is within the preset threshold range, the respective mobile component (20) is able to be kept moving along the guide rail under the action of gravity so that the mobile component (20) for connection with the component (300) to be transported is in the balance position.

15. A transport equipment (200), comprising the balance bearing device (100) as claimed in any one of claims 1 to 13.

## Patentansprüche

1. Ausgleichslagerungsvorrichtung (100) für eine Transporteinrichtung (200), umfassend:
zwei oder mehr bewegliche Baugruppen (1), wobei die zwei oder mehr beweglichen Baugruppen (1) so angeordnet sind, dass sie gestapelt werden können, wobei jede der beweglichen Baugruppen eine Basis (10), eine bewegliche Komponente (20) und eine Einstellkomponente (30) umfasst, wobei die Basis (10) eine bogenförmige Führungsschiene (11) umfasst, während die bewegliche Komponente (20) auf der Basis (10) angeordnet ist und sich unter der Wirkung der Schwerkraft entlang einer Erstreckungsbahn der Führungsschiene (11) bewegen kann, so dass, wenn sich die Transporteinrichtung (200) kippt, sich die mit einer zu transportierenden Komponente (300) verbundene bewegliche Komponente (20) immer in einer Gleichgewichtsposition befindet, und wobei die Einstellkomponente (30) zwischen der beweglichen Komponente (20) und der Basis (10) verbunden und dazu konfiguriert ist, eine Begrenzungsposition der sich entlang der Führungsschiene (11) bewegenden beweglichen Komponente (20) zu begrenzen;
wobei sich die Erstreckungsrichtungen (X) der Führungsschienen (11) zweier benachbarter beweglicher Baugruppen (1) schneiden und die Basis (10) einer der beiden benachbarten beweglichen Baugruppen (1) mit der beweglichen Komponente (20) der anderen der beiden benachbarten beweglichen Baugruppen (1) verbunden ist, und wobei in einer Stapelrichtung (Y) der zwei oder mehr beweglichen Baugruppen (1) die bewegliche Baugruppe (1), die sich in der obersten Schicht befindet, über die bewegliche Komponente (20) mit der zu transportierenden Komponente (300) verbunden werden kann.

2. Ausgleichslagerungsvorrichtung (100) nach Anspruch 1, wobei die bewegliche Komponente (20) einen Lagerkörper (21) und mehrere bewegliche Einheiten (22) umfasst, wobei die mehreren beweglichen Einheiten (22) so verteilt sind, dass sie voneinander beabstandet und jeweils mit dem Lagerkörper (21) verbunden sind, und wobei jede bewegliche Einheit (22) beweglich mit der Führungsschiene (11) verbunden ist.

3. Ausgleichslagerungsvorrichtung (100) nach Anspruch 2, wobei die Basis (10) jeder beweglichen Komponente (1) zwei oder mehr parallele Führungsschienen (11) umfasst, die voneinander beabstandet angeordnet sind, wobei jede Führungsschiene (11) beweglich mit mindestens einer beweglichen Einheit (22) verbunden ist.

4. Ausgleichslagerungsvorrichtung (100) nach Anspruch 2, wobei die bewegliche Einheit (22) einen Tragrahmen (221), eine Laufkomponente (222) und eine Verriegelungskomponente (223) umfasst, wobei die Laufkomponente (222) über die Verriegelungskomponente (223) mit dem Tragrahmen (221) verbunden ist und sich entlang der Erstreckungsbahn der Führungsschiene (11) bewegen kann, während die Verriegelungskomponente (223) dazu konfiguriert ist, eine Position der Laufkomponente (222) auf der Basis (10) zu verriegeln.

5. Ausgleichslagerungsvorrichtung (100) nach Anspruch 4, wobei in der Stapelrichtung (Y) die Basis (10) eine Oberseite (12) und eine Unterseite (13) umfasst, die einander gegenüberliegend angeordnet sind, wobei die Oberseite (12) eine bogenförmige Oberfläche ist, die in Richtung der Unterseite (13) vorsteht und auf der die Führungsschiene (11) angeordnet ist, während die Laufkomponente (222) zumindest teilweise auf der Oberseite (12) gelagert ist, wobei eine von der beweglichen Komponente (222) und den Führungsschienen (11) sich zumindest teilweise in das Innere der anderen von der beweglichen Komponente (222) und den Führungsschienen (11) erstreckt und beweglich mit der anderen von der beweglichen Komponente (222) und den Führungsschienen (11) verbunden ist.

6. Ausgleichslagerungsvorrichtung (100) nach Anspruch 5, wobei die Führungsschiene (11) ein bogenförmiger Nutkörper und so ausgebildet ist, dass sie von der Oberseite (12) zu einer der Unterseite (13) zugewandten Seite hin vertieft ist, während die Laufkomponente (222) ein Laufrad (2221) und einen Klemmvorsprung (2222) umfasst, der drehbar mit dem Laufrad (2221) verbunden ist, wobei das Laufrad (2221) auf der Oberseite (12) gelagert und drehbar mit der Verriegelungskomponente (223) verbunden ist, während der Klemmvorsprung (2222) innerhalb der Führungsschiene (11) geklemmt ist und sich entlang der Erstreckungsrichtung (X) der Führungsschiene (11) bewegen kann;
oder wobei die Führungsschiene (11) ein bogenförmiger Vorsprung und so ausgebildet ist, dass sie von der Oberseite (12) zu einer von der Unterseite (13) abgewandten Seite hin vorsteht, während die Laufkomponente (222) ein Laufrad (2221) und eine Klemmnut (2221a) umfasst, die auf dem Laufrad (2221) angeordnet ist, wobei das Laufrad (2221) auf der Oberseite (12) gelagert ist, während die Klemmnut (2221a) an der Führungsschiene (11) geklemmt ist und sich entlang der Erstreckungsrichtung (X) der Führungsschiene (11) bewegen kann.

7. Ausgleichslagerungsvorrichtung (100) nach Anspruch 4, wobei die Verriegelungskomponente (223) einen Einbaukörper (2231) und einen Drehkörper (2232) umfasst, wobei der Einbaukörper (2231) mit dem Tragrahmen (221) verbunden ist, während der Drehkörper (2232) über ein erstes Drehpaar (2233) mit dem Einbaukörper (2231) und die Laufkomponente (222) über ein zweites Drehpaar (2234) mit dem Drehkörper (2232) drehbar verbunden ist, und wobei eine Drehachse des ersten Drehpaares (2233) parallel zu einer Drehachse des zweiten Drehpaares (2234) und beabstandet von der Drehachse des zweiten Drehpaares (2234) ist.

8. Ausgleichslagerungsvorrichtung (100) nach Anspruch 7, wobei der Drehkörper (2232) einen ersten Drehkörper (2232a) und einen zweiten Drehkörper (2232b) umfasst und der Einbaukörper (2231) zwischen dem ersten Drehkörper (2232a) und dem zweiten Drehkörper (2232b) angeordnet ist, wobei das erste Drehpaar (2233) fest mit dem ersten Drehkörper (2232a) und dem zweiten Drehkörper (2232b) verbunden und drehbar mit dem Einbaukörper (2231) verbunden ist, während die Laufkomponente (222) mit dem ersten Drehkörper (2232) verbunden ist.

9. Ausgleichslagerungsvorrichtung (100) nach Anspruch 8, wobei die Verriegelungskomponente (223) ferner eine Antriebsbaugruppe (2235) umfasst, die den Drehkörper (2232) antreibt, um sich relativ zum Einbaukörper (2231) mit dem ersten Drehpaar (2233) als Drehpunkt zu drehen.

10. Ausgleichslagerungsvorrichtung (100) nach Anspruch 7, wobei die Verriegelungskomponente (223) ferner ein Einsteckteil (2236) umfasst, das lösbar mit der Laufkomponente (222), dem Einbaukörper (2231) und dem Drehkörper (2232) verbunden ist.

11. Ausgleichslagerungsvorrichtung (100) nach Anspruch 1, wobei die Ausgleichslagerungsvorrichtung (100) ferner eine Adapterbaugruppe (2) umfasst, die zwischen zwei benachbarten beweglichen Baugruppen (1) verbunden ist.

12. Ausgleichslagerungsvorrichtung (100) nach Anspruch 11, wobei die Adapterbaugruppe (2) eine Übergangsplattform (201) und eine Stützstange (202) umfasst, wobei die Übergangsplattform (201) zwischen den beiden benachbarten beweglichen Baugruppen (1) angeordnet ist, wobei eine bogenförmige Führungsnut (14) an der Basis (10) einer der beiden benachbarten beweglichen Baugruppen (1) vorgesehen ist, wobei die Übergangsplattform (201) mit der beweglichen Komponente (20) einer der beiden benachbarten beweglichen Baugruppen (1) und mit der Basis (10) der anderen der beiden benachbarten beweglichen Baugruppen (1) verbunden ist, wobei ein Ende der Stützstange (202) an der Übergangsplattform (201) angelenkt und das andere Ende der Stützstange (202) beweglich mit der bogenförmigen Führungsnut (14) verbunden ist.

13. Ausgleichslagerungsvorrichtung (100) nach Anspruch 1, wobei die Ausgleichslagerungsvorrichtung (100) ferner einen Detektor (3) und eine Steuerung (4) umfasst, wobei der Detektor (3) dazu konfiguriert ist, eine Kippbedingung der Transporteinrichtung (200) zu erfassen, während die Steuerung (4) so konfiguriert ist, dass, wenn die Kippbedingung innerhalb des voreingestellten Schwellenbereichs liegt, die jeweilige bewegliche Komponente (20) unter der Wirkung der Schwerkraft entlang der Führungsschiene in Bewegung gehalten werden kann, so dass sich die bewegliche Komponente (20) zur Verbindung mit der zu transportierenden Komponente (300) in der Gleichgewichtsposition befindet.

14. Steuerverfahren für die Ausgleichslagerungsvorrichtung (100) nach einem der Ansprüche 1 bis 12, umfassend:
Erfassen einer Kippbedingung der Transporteinrichtung (200), in der sich die Ausgleichslagerungsvorrichtung (100) befindet; und
wobei, wenn die Kippbedingung innerhalb des voreingestellten Schwellenbereichs liegt, die jeweilige bewegliche Komponente (20) unter der Wirkung der Schwerkraft entlang der Führungsschiene in Bewegung gehalten werden kann, so dass sich die bewegliche Komponente (20) zur Verbindung mit der zu transportierenden Komponente (300) in der Gleichgewichtsposition befindet.

15. Transporteinrichtung (200), umfassend die Ausgleichslagerungsvorrichtung (100) nach einem der Ansprüche 1 bis 13.

## Revendications

1. Dispositif de palier d'équilibrage (100) pour un équipement de transport (200), comprenant :
deux ensembles mobiles (1) ou plus, dans lequel les deux ensembles mobiles (1) ou plus sont agencés pour être empilés, chaque ensemble mobile inclut une base (10), un composant mobile (20), et un composant d'ajustement (30), la base (10) comprend une glissière en arc de cercle (11), le composant mobile (20) est agencé à la base (10) et peut se déplacer le long d'une trajectoire d'extension de la glissière (11) sous l'action de la gravité de sorte que lorsque l'équipement de transport (200) s'incline, le composant mobile (20) raccordé à un composant (300) à transporter est toujours en position d'équilibre, le composant d'ajustement (30) est raccordé entre le composant mobile (20) et la base (10), et est configuré pour limiter une position limitante du composant mobile (20) se déplaçant le long de la glissière (11) ;
dans lequel les directions d'extension (X) de la glissière (11) de deux ensembles mobiles adjacents (1) se recoupent mutuellement, et la base (10) de l'un des deux ensembles mobiles adjacents (1) est raccordée au composant mobile (20) de l'autre des deux ensembles mobiles adjacents (1), et dans le sens d'empilement (Y) de deux ensembles mobiles (1) ou plus, l'ensemble mobile (1) situé à la couche supérieure peut être raccordé au composant (300) à transporter via le composant mobile (20).

2. Dispositif de palier d'équilibrage (100) selon la revendication 1, dans lequel le composant mobile (20) comprend un corps de palier (21) et une pluralité d'unités mobiles (22), la pluralité d'unités mobiles (22) est distribuée de façon à être espacée et raccordée respectivement au corps de palier (21), et chaque unité mobile (22) est raccordée de façon mobile à la glissière (11).

3. Dispositif de palier d'équilibrage (100) selon la revendication 2, dans lequel la base (10) de chaque composant mobile (1) comprend deux glissières parallèles (11) ou plus qui sont agencées de façon à être espacées, et chaque glissière (11) est raccordée de façon mobile à au moins une unité mobile (22).

4. Dispositif de palier d'équilibrage (100) selon la revendication 2, dans lequel l'unité mobile (22) comprend un cadre de support (221), un composant voyageur (222) et un composant de verrouillage (223), le composant voyageur (222) est raccordé au cadre de support (221) via le composant de verrouillage (223), le composant voyageur (222) peut se déplacer le long de la trajectoire d'extension de la glissière (11), et le composant de verrouillage (223) est configuré pour verrouiller la position du composant voyageur (222) sur la base (10).

5. Dispositif de palier d'équilibrage (100) selon la revendication 4, dans lequel dans le sens d'empilement (Y), la base (10) comprend une surface supérieure (12) et une surface inférieure (13) qui sont agencées afin d'être mutuellement opposées, la surface supérieure (12) est une surface en arc de cercle saillant dans la direction où se trouve la surface inférieure (13), la glissière (11) est agencée sur la surface en arc de cercle, le composant voyageur (222) est au moins partiellement soutenu par la surface supérieure (12) et par l'un des composants voyageurs (222) et la glissière **(11)** se prolonge au moins partiellement à l'intérieur de l'autre composant voyageur (222) et de l'autre glissière (11) et est raccordée de façon mobile à l'autre composant voyageur (222) et à la glissière (11).

6. Dispositif de palier d'équilibrage (100) selon la revendication 5, dans lequel la glissière **(11)** est un corps de gorge en arc de cercle, la glissière **(11)** est formée de façon à être renfoncée depuis la surface supérieure (12) vers un côté proximal de la surface inférieure (13), le composant voyageur (222) comprend une roue voyageuse (2221) et une saillie de serrage (2222) raccordée de façon rotative à la roue voyageuse (2221), la roue voyageuse (2221) est soutenue par la surface supérieure (12) et est raccordée de façon rotative au composant de verrouillage (223), et la saillie de serrage (2222) est serrée à l'intérieur de la glissière (11) et peut se déplacer le long du sens d'extension (X) de la glissière (11) ;
ou, la glissière (11) est une saillie en arc de cercle, la glissière (11) est formée de façon à saillir de la surface supérieure (12) vers un côté distal de la surface inférieure (13), le composant voyageur (222) comprend une roue voyageuse (2221) et une gorge de serrage (2221 a) agencée sur la roue voyageuse (2221), la roue voyageuse (2221) est soutenue par la surface supérieure (12), et la gorge de serrage (2221a) est serrée à la glissière (11) et peut se déplacer le long du sens d'extension (X) de la glissière (11).

7. Dispositif de palier d'équilibrage (100) selon la revendication 4, dans lequel le composant de verrouillage (223) comprend un corps d'installation (2231) et un corps rotatif (2232), le corps d'installation (2231) est raccordé au cadre de support (221), le corps rotatif (2232) est raccordé de façon rotative au corps d'installation (2231) via une première paire rotative (2233), le composant voyageur (222) est raccordé de façon rotative au corps rotatif (2232) via une deuxième paire rotative (2234), et l'axe de rotation de la première paire rotative (2233) est parallèle à l'axe de rotation de la deuxième paire rotative (2234) et est espacé de l'axe de rotation de la deuxième paire rotative (2234).

8. Dispositif de palier d'équilibrage (100) selon la revendication 7, dans lequel le corps rotatif (2232) comprend un premier corps rotatif (2232a) et un deuxième corps rotatif (2232b), et le corps d'installation (2231) est situé entre le premier corps rotatif (2232a) et le deuxième corps rotatif (2232b), la première paire rotative (2233) est raccordée fixement au premier corps rotatif (2232a) et au deuxième corps rotatif (2232b) et est raccordée de façon rotative au corps d'installation (2231), et le composant voyageur (222) est raccordé au premier corps rotatif (2232).

9. Dispositif de palier d'équilibrage (100) selon la revendication 8, dans lequel le composant de verrouillage (223) comprend en outre un ensemble d'entraînement (2235) qui entraîne la rotation du corps rotatif (2232) par rapport au corps d'installation (2231) en prenant la première paire rotative (2233) comme centre de rotation.

10. Dispositif de palier d'équilibrage (100) selon la revendication 7, dans lequel le composant de verrouillage (223) comprend en outre une partie d'insertion (2236) raccordée de façon amovible au composant voyageur (222), au corps d'installation (2231), et au corps rotatif (2232).

11. Dispositif de palier d'équilibrage (100) selon la revendication 1, dans lequel le palier d'équilibrage (100) comprend en outre un ensemble adaptateur (2) qui est raccordé entre deux ensembles mobiles (1) adjacents.

12. Dispositif de palier d'équilibrage (100) selon la revendication 11, dans lequel l'ensemble adaptateur (2) comprend une plateforme de transition (201) et une tige de support (202), la plateforme de transition (201) est située entre deux ensembles mobiles (1) adjacents, une gorge de guidage en arc de cercle (14) est fournie à la base (10) de l'un des deux ensembles mobiles (1) adjacents, la plateforme de transition (201) est raccordée au composant mobile (20) de l'un des deux ensembles mobiles (1) adjacents et est raccordée à la base (10) de l'autre des deux ensembles mobiles (1) adjacents, une terminaison de la tige de support (202) est articulée à la plateforme de transition (201) et l'autre terminaison de la tige de support (202) est raccordée de façon mobile à la gorge de guidage en arc de cercle (14).

13. Dispositif de palier d'équilibrage (100) selon la revendication 1, dans lequel le palier d'équilibrage (100) comprend en outre un détecteur (3) et un dispositif de commande (4), le détecteur (3) est configuré pour détecter une situation d'inclinaison de l'équipement de transport (200), le dispositif de commande (4) est configuré afin que lorsque la situation d'inclinaison se situe dans une plage seuil prédéfinie, le composant mobile (20) respectif peut continuer de se déplacer le long de la glissière sous l'action de la gravité de sorte que le composant mobile (20) pour le raccordement du composant (300) à transporter soit en position d'équilibre.

14. Procédé de commande de dispositif de palier d'équilibrage (100) selon l'une quelconque des revendications 1 à 12, comprenant :
détecter une situation d'inclinaison de l'équipement de transport (200) où le dispositif de palier d'équilibrage (100) est situé ; et
lorsque la situation d'inclinaison se situe dans une plage seuil prédéfinie, le composant mobile (20) respectif peut continuer de se déplacer le long de la glissière sous l'action de la gravité de sorte que le composant mobile (20) pour le raccordement du composant (300) à transporter soit en position d'équilibre.

15. Équipement de transport (200), comprenant le dispositif de palier d'équilibrage (100) selon l'une quelconque des revendications 1 à 13.
